# EUROPEAN PATENT SPECIFICATION

(11) **EP 2 570 292 B1**
(45) Date of publication and mention of the grant of the patent: **21.08.2019**
(21) Application number: 11780380.9
(22) Date of filing: 10.05.2011
(51) Int. Cl.: B60L 9/24, B60L 7/14, B60L 7/16, B60L 3/00, H02M 5/45, B60L 1/00, H02J 7/34, H02M 5/458

(54) **ALTERNATING-CURRENT ELECTRIC VEHICLE**
WECHSELSTROM-ELEKTROFAHRZEUG
VÉHICULE À COURANT ALTERNATIF

(30) Priority: 12.05.2010 JP 2010110416
(43) Date of publication of application: 20.03.2013
(73) Proprietor: Kabushiki Kaisha Toshiba, Minato-ku Tokyo 105-8001 (JP)
(72) Inventor: SADAKATA, Shungo, Tokyo 105-8001 (JP)
(74) Representative: AWA Sweden AB
(86) International application number: PCT/JP2011/002598
(87) International publication number: WO 2011/142121

(56) References cited:
- EP-A1- 0 655 363
- EP-A2- 0 780 959
- DE-A1-102004 033 379
- JP-A- 3 098 401
- JP-A- S62 225 197
- JP-A- 2001 145 201
- JP-A- 2001 320 804
- JP-A- 2008 148 531
- JP-A- 2009 072 003
- US-A1- 2008 296 970

## Description

### [Technical field]

The present invention relates to an AC electric vehicle that runs by electric power.

### [Background art]

Typically, in an AC electric vehicle, a main three-winding transformer is provided. AC power from the overhead line (so-called feeder or, more precisely, the overhead contact line) is supplied to the primary side of the main transformer. A secondary circuit for supplying power to a main motor for making the AC electric vehicle fun is connected with the secondary side of the main transformer. A tertiary circuit for supplying power to auxiliary equipment such as for air conditioning or illumination is connected with the tertiary side of the main transformer.

In such an AC electric vehicle, a battery may be provided in the secondary circuit to enable the main motor to be operated efficiently. Also, a battery may be provided in the tertiary circuit to enable power to be continuously supplied even when power supply from the overhead line is cut off. This is disclosed in for example Japanese Laid-open Patent Application No. 2009-95080 (hereinafter referred to as Patent Reference 1).

### [Outline of the invention]

### [Problem that the invention is intended to solve]

However, in an AC electric vehicle as described above, the secondary circuit and the tertiary circuit are respectively isolated. Consequently, if a battery is provided in one of the secondary circuit and tertiary circuit, the other circuit cannot utilize this battery. Power cannot therefore be shared between the secondary circuit and the tertiary circuit.

Accordingly, an object of the present invention is to provide an AC electric vehicle in which power can be shared between the circuit that supplies power to the motor for moving the vehicle and the circuit that supplies power to auxiliary equipment.

### Prior art references

[Patent reference 1] Laid-open Japanese Patent Application 2009-95080

EP0780959 (A2) discloses a static converter arrangement with two pulse-controlled AC converters which include a feed circuit, a voltage link equipped with a capacitor bank and a pulse-controlled inverter. The + and - pole of the two voltage links are electrically connected to one another via connection line provided with a switch. Between the + pole of one of the voltage links and the - pole of the other voltage link is arranged a protection-, monitoring- and safety (security) device. JPS62225197 (A) relates to a motor control device.

JP2008148531 (A) relates to an electric railway system.

### [Means for solving the problem]

An AC electric vehicle in accordance with the present invention is defined in claim 1.

With the present invention, an AC electric vehicle can be provided in which power can be shared between the circuit that supplies power to the motor for moving the vehicle and the circuit that supplies power to auxiliary equipment.

### [Brief description of the drawings]

Fig. 1 is an exemplary diagram showing the configuration of an AC electric vehicle according to a first embodiment of the present invention.
Fig. 2 is an exemplary diagram showing the configuration of an AC electric vehicle according to a second embodiment of the present invention.
Fig. 3 is an exemplary diagram showing the configuration of an AC electric vehicle according to a third embodiment of the present invention.
Fig. 4 is an exemplary diagram showing the configuration of an AC electric vehicle according to a fourth embodiment of the present invention.
Fig. 5 is an exemplary diagram showing the configuration of an AC electric vehicle according to a fifth embodiment of the present invention.
Fig. 6 is an exemplary diagram showing the configuration of an AC electric vehicle according to a sixth embodiment of the present invention.

### [Mode for putting the invention into practice]

An embodiment of the present invention is described below with reference to the drawings.

### (First embodiment)

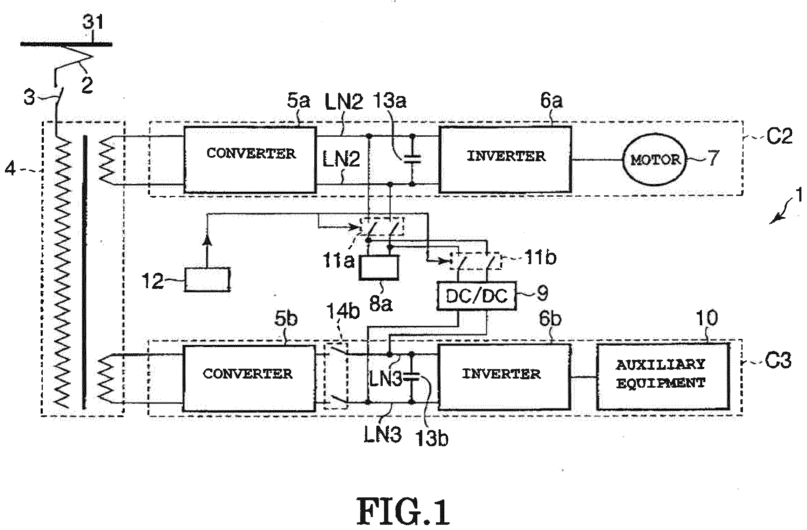

Fig. 1 is an exemplary diagram showing the configuration of an AC electric vehicle 1 according to a first embodiment. It should be noted that identical parts in the following Figures are given the same reference symbols and detailed description thereof is omitted, the description focusing on the new parts. The same applies to the following embodiments, in order to avoid repetition of description.

An AC electric vehicle 1 includes: a current collector 2; a circuit breaker 3; a main transformer 4; a secondary circuit C2; a tertiary circuit C3; a battery 8a; a DC/DC converter 9; contactors 11a, 11b; and manual switches 12.

The current collector 2 collects AC power that is supplied from the overhead line 31. The current collector 2 supplies this collected AC power to the primary side of the main transformer 4 through the circuit breaker 3.

The circuit breaker 3 is placed between the current collector 2 and the main transformer 4, and connected to the current collector 2 and the main transformer 4. When the circuit breaker 3 is closed, the electrical circuit in the AC electric vehicle 1 is electrically connected to the overhead line 31. When the circuit breaker 3 is opened, the overhead line 31 and the electrical circuit in the AC electric vehicle 1 are electrically disconnected.

The circuit breaker 3 is connected with the primary side of the main transformer 4. The secondary circuit C2 is connected with the secondary side of the main transformer 4. The tertiary circuit C3 is connected with the tertiary side of the main transformer 4. In powered operation (sometimes also called motoring operation or power running operation) of the main transformer 4, the AC power that is supplied from the overhead line 31 is stepped down before being supplied to the secondary circuit C2 and tertiary circuit C3. During regenerative operation by the main transformer 4, AC power that is supplied from the secondary circuit C2 is supplied to the overhead line 31.

The secondary circuit C2 is constructed including a converter 5a, inverter 6a, main motor 7 and filter capacitor 13a. The main motor 7 may be an electric motor.

The AC side of the converter 5a is connected with the secondary side of the main transformer 4. The DC side of the converter 5a is connected with the DC side of the inverter 6a by means of an intermediate DC link LN2. During powered operation, the converter 5a converts the AC power that is supplied from the main transformer 4 to DC power, which is supplied to the inverter 6a. During regenerative operation, the converter 5a converts the DC power that is supplied from the inverter 6a to AC power, which is supplied to the main transformer 4.

The DC side of the inverter 6a is connected with the converter 5a. The AC side of the inverter 6a is connected with the main motor 7. During powered operation, the inverter 6a converts the DC power that is supplied from the inverter 5a to AC power, which is supplied to the main motor 7. During regenerative operation, the inverter 6a converts the regenerated power from the main motor 7 to DC power, which is supplied to the converter 5a. The inverter 6a is for example a VVVF (variable voltage variable frequency) inverter.

During powered operation, the main motor 7 constitutes the propulsion power source for making the AC electric vehicle 1 run. The main motor 7 is driven by AC power that is supplied from the inverter 6a. During regenerative operation, the main motor 7 acts as an electrical power source that generates regenerated power. The regenerated power at the main motor 7 is supplied to the inverter 6a.

The filter capacitor 13a is provided between the positive electrode and negative electrode of the intermediate DC link LN2. One terminal of the filter capacitor 13a is connected with the positive electrode of the intermediate DC link LN2, while its other terminal is connected with the negative electrode thereof, respectively. The filter capacitor 13a reduces the current ripple flowing on the intermediate DC link LN2.

The tertiary circuit C3 is constituted including a converter 5b, inverter 6b, auxiliary equipment 10, filter capacitor 13b and contactor 14b.

The AC side of the converter 5b is connected with the tertiary side of the main transformer 4. The DC side of the converter 5b is connected with the DC side of the inverter 6b by an intermediate DC link LN3. The converter 5b converts the AC power that is supplied from the main transformer 4 to DC power, which.is supplied to the inverter 6b.

The DC side of the inverter 6b is connected with the converter 5b. The AC side of the inverter 6b is connected with auxiliary equipment 10. The inverter 6b converts the DC power supplied from the converter 5b to AC power, which is supplied to the equipment 10. The inverter 6b is for example a CVCF (constant voltage constant frequency) inverter.

The auxiliary equipment 10 is equipment constituting a load other than the main motor 7. The auxiliary equipment 10 is equipment auxiliary to the operation of the AC electric vehicle 1, such as a power source for the air-conditioning equipment, electric vehicle illumination, or control circuitry.

A filter capacitor 13b is provided between the positive electrode and negative electrode of the intermediate DC link LN3. One terminal of the filter capacitor 13b is connected with the positive electrode of the intermediate DC link LN3, while the other terminal thereof is connected with the negative electrode thereof, respectively. The filter capacitor 13b reduces the current ripple flowing in the intermediate DC link LN3.

A contactor 14b is provided on the intermediate DC link LN3. When closed, the contactor 14b electrically connects the converter 5b and the inverter 6b. When opened, the contactor 14b electrically disconnects the converter 5b and the inverter 6b.

The battery 8a is connected with the intermediate DC link LN2 of the secondary circuit C2 through the contactor 11a. The battery 8a is connected with the intermediate DC link LN3 of the tertiary circuit C3 sequentially through the contactor 11b and the DC/DC converter 9.

When closed, the contactor 11a effects electrical connection of the battery 8a and the intermediate DC link LN2. When opened, the contactor 11a electrically disconnects the battery 8a and the intermediate DC link LN2.

When closed, the contactor 11b effects electrical connection of the battery 8a and the intermediate DC link LN3 (or DC/DC converter 9). When opened, the contactor 11b electrically disconnects the battery 8a and the intermediate DC link LN3 (or DC/DC converter 9).

The DC/DC converter 9 converts the DC power that is supplied from the contactor 11b to a DC voltage that is appropriate to the intermediate DC link LN3 of the tertiary circuit C3. The DC/DC converter 9 supplies this converted DC power to the intermediate DC link LN3.

The manual switches 12 constitute manual control equipment for individually turning ON or OFF the contactors 11a, 11b, respectively, by an operator (driver or conductor etc). The manual switches 12 are arranged in for example the driver's cab or equipment room.

When the AC electric vehicle 1 is performing powered or regenerative operation, the contactor 11a is turned ON while the contactor 11b is turned OFF. During powered operation, the battery 8a is charged by power from the overhead line 31. During regenerative operation, the battery 8a is charged by regenerated power from the main motor 7.

When current supply from the overhead line (train line) 31 is stopped, the operator operates the contactors 11a, 11b by the manual switches 12 in accordance with the situation.

If the priority is to move the AC electric vehicle 1 to a location where power supply can be obtained from the overhead line (train line) 31, the operator turns the contactor 11a ON and turns the contactor 11b OFF. In this way, power is supplied by the battery 8a exclusively to the secondary circuit C2.

If it can be expected that the current supply from the overhead line (train line) 31 will be restored in a short time, the operator turns the contactor 11a OFF and turns the contactor 11b ON. In this way, the battery 8a supplies power exclusively to the tertiary circuit C3, through the DC/DC converter 9.

When the AC electric vehicle 1 is moved while operating the auxiliary equipment 10, the operator turns both the contactors 11a, 11b ON. In this way, the battery 8a supplies power to both the secondary circuit C2 and the tertiary circuit C3.

With this embodiment, the operator can arbitrarily select the circuits C2, C3 to be supplied with the power from the battery 8a, by operating the contactors 11a, 11b.

The operator can prioritize supply of power to the main motor 7 by selecting (by turning the contactor 11a ON) the circuit C2 as the circuit to be supplied with power by the battery 8a. In this way, priority can be given to movement of the AC electric vehicle 1 to a location where power can be supplied.

The operator can prioritize continuance of operation of the auxiliary equipment 10 by selecting the circuit C3 (by turning the contactor 11b ON) as the circuit that is to be supplied with power by the battery 8a. For example, when the auxiliary equipment 10 is service equipment such as illumination or air conditioning devices within a passenger vehicle compartment, continuance of service to passengers can be prioritized. An example of the case where the operator would select the circuit C3 is the case where it is anticipated that supply of power from the overhead line (train line) 31 will be restored in a short time.

By selecting (by turning both collectors 11a and 11b ON) both circuit C2 and circuit C3 as circuits to be supplied with power by the battery 8a, the operator can move the AC vehicle 1 to the location where power is supplied, while continuing operation of the auxiliary equipment 10 such as the service equipment.

Consequently, the operator can select the optimum method for sharing the energy with which the battery 8a is charged with the secondary circuit C2 and the tertiary circuit C3 of the AC electric vehicle 1, in accordance with the circumstances.

### (Second embodiment)

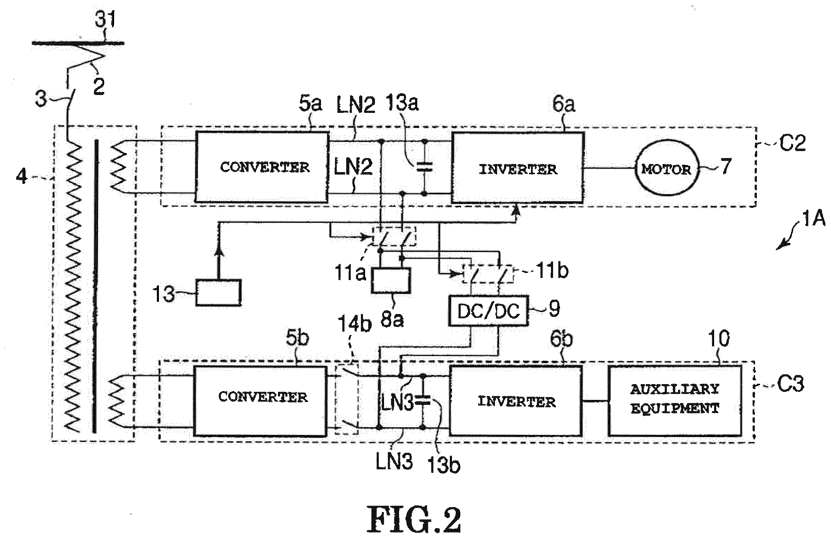

Fig. 2 is an exemplary diagram showing the configuration of an AC electric vehicle 1A according to a second embodiment.

The configuration of the AC electric vehicle 1A basically corresponds to the AC electric vehicle 1 according to the first embodiment shown in Fig. 1, a vehicle control device 13 is provided instead of the manual switches 12. Otherwise, this embodiment is the same as the first embodiment.

When the AC electric vehicle 1A is performing powered operation, the contactor 11a is turned ON, and the contactor 11b is turned OFF. During powered operation, the battery 8a is charged by power from the overhead line (train line) 31.

The vehicle control device 13 outputs a regeneration instruction signal for performing regenerative operation to the inverter 6a. This regeneration instruction signal is also output as an instruction for turning both the contactors 11a, 11b ON. In this way, during regeneration, the regenerated power generated from the main motor 7 is used to charge the battery 8a. Also, this regenerated power is supplied to the tertiary circuit C3 through the DC/DC converter 9.

With this embodiment, in accordance with the regeneration instruction signal that is output from the vehicle control device 13, the contactors 11a, 11b are automatically turned ON. In this way, during regenerative operation of the AC electric vehicle 1A, regenerated power can be efficiently utilized by the secondary circuit C2 and tertiary circuit C3.

### (Third embodiment)

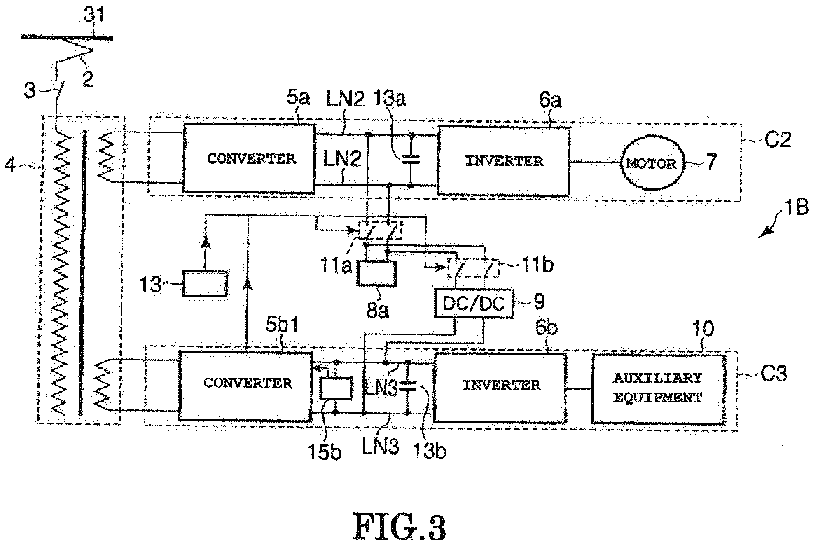

Fig. 3 is an exemplary diagram showing the configuration of an AC electric vehicle 1B according to a third embodiment.

The configuration of the AC electric vehicle 1B basically corresponds to the AC electric vehicle 1A according to the second embodiment shown in Fig. 2, a DC voltage monitoring device 15b is added and, instead of the converter 5b, a converter 5b1 is provided. Otherwise, this embodiment is the same as the second embodiment.

During powered operation of the AC electric vehicle 1B, the contactor 11a is turned ON, and the contactor 11b is turned OFF. During powered operation, the battery 8a is charged by power from the overhead line (train line) 31. During regenerative operation of the AC electric vehicle 1B, the contactors 11a, 11b are both turned ON by the vehicle control device 13. During regenerative operation, the regenerated power from the main motor 7 is used to charge the battery 8a and is also supplied to the tertiary circuit C3.

The DC voltage monitoring device 15b is provided on the intermediate DC link LN3 of the tertiary circuit C3. The DC voltage monitoring device 15b monitors the DC voltage of the intermediate DC link LN3. When the DC voltage monitoring device 15b detects that the DC voltage of the intermediate DC link LN3 has dropped, the DC voltage monitoring device 15b sends a detection signal to the converter 5b1.

When the converter 5b1 receives the detection signal indicating that the DC voltage of the intermediate DC link LN3 has dropped from the DC voltage monitoring device 15b, in a condition in which power is being supplied from the overhead line (train line) 31, the converter 5b1 turns the contactor 11a OFF and turns the contactor 11b ON. In this case, control unit installed in the converter 5b1 may control the contactor 11a. In this way, the battery 8a supplies power exclusively to the tertiary circuit C3 through the DC/DC converter 9. Otherwise, the converter 5bl is the same as the converter 5b according to the first embodiment.

In a condition in which the converter 5b1 is being supplied with power from the overhead line (train line) 31, if the converter 5b1 receives a detection signal indicating voltage drop from the DC voltage monitoring device 15b, this indicates for example that the converter 5b1 is malfunctioning.

According to the third embodiment, in addition to the beneficial effects of the second embodiment, the following beneficial effects can be obtained.

The AC electric vehicle 1B can detect malfunction of the converter 5b1 by monitoring the DC voltage of the intermediate DC link LN3, by using the DC voltage monitoring device 15b. In response to this detection, the contactors 11a, 11b are operated so as to supply power from the battery 8a to the tertiary circuit C3. In this way, unstable operation or cessation of operation of the auxiliary equipment 10 of the tertiary circuit C3 can be avoided.

### (Fourth embodiment)

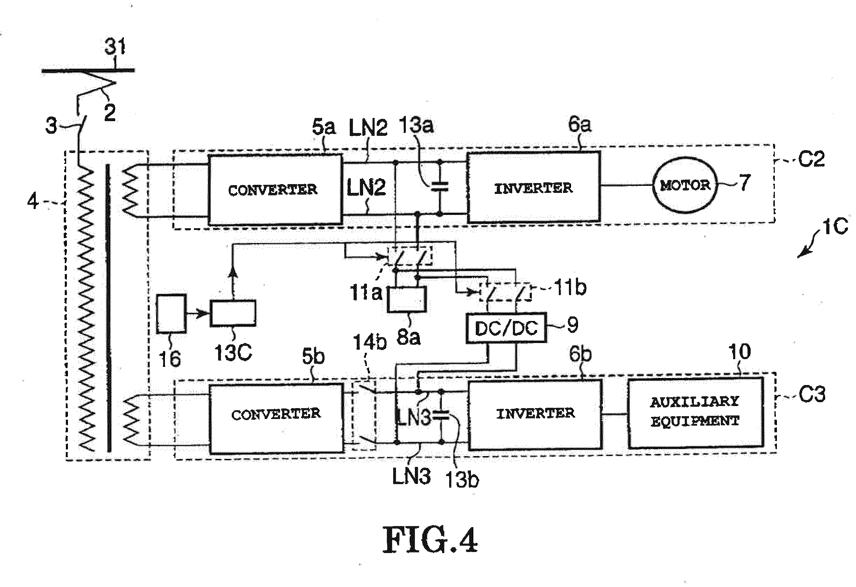

Fig. 4 is an exemplary diagram showing the configuration of an AC electric vehicle 1C according to a fourth embodiment.

The configuration of the AC electric vehicle 1C basically corresponds to the AC electric vehicle 1A according to the second embodiment shown in Fig. 2 except that the AC electric vehicle 1C is equipped with a pick-up coil 16 for detecting a section and a vehicle control device 13C instead of the vehicle control device 13. Otherwise, this embodiment is the same as the second embodiment.

During powered operation or regenerative operation of the AC electric vehicle 1C, the contactor 11a is turned ON and the contactor 11b is turned OFF. During powered operation, the battery 8a is charged by power from the overhead line (train line) 31. During regenerative operation, the battery 8a is charged by regenerated power from the main motor 7.

The pickup coil 16 detects entry into a no-power zone prior to entry of the vehicle into this no-power zone (dead section). A no-power zone is a zone in which no power is supplied from the overhead line (train line) 31. The pickup coil 16, when it detects entry into a no-power zone, outputs a dead zone passage signal to the vehicle control device 13C.

The vehicle control device 13C, when it receives a dead section passage signal from the vehicle-top section detection element 16, turns the contactor 11b ON. The contactor 11a may also be simultaneously turned ON. In this way, power is supplied to the tertiary circuit C3 by the battery 8a through the DC/DC converter 9.

With this embodiment, by providing the pickup coil 16, the AC electric vehicle 1C can detect entry into a no-power zone prior to actual entry into this zone. In this way, the AC electric vehicle 1C can perform preparations for supply of power from the battery 8a to the tertiary circuit C3 prior to entry into the no-power zone. Operation of the auxiliary equipment 10 can therefore be continued without instantaneous cut-off, even when the AC electric vehicle 1C is passing through a no-power zone. For example, if the auxiliary equipment 10 is service equipment such as illumination or air conditioning devices within the passenger compartment of the vehicle, the AC electric vehicle 1C can pass through the no-power zone while still continuing to provide service to the passengers.

### (Fifth embodiment)

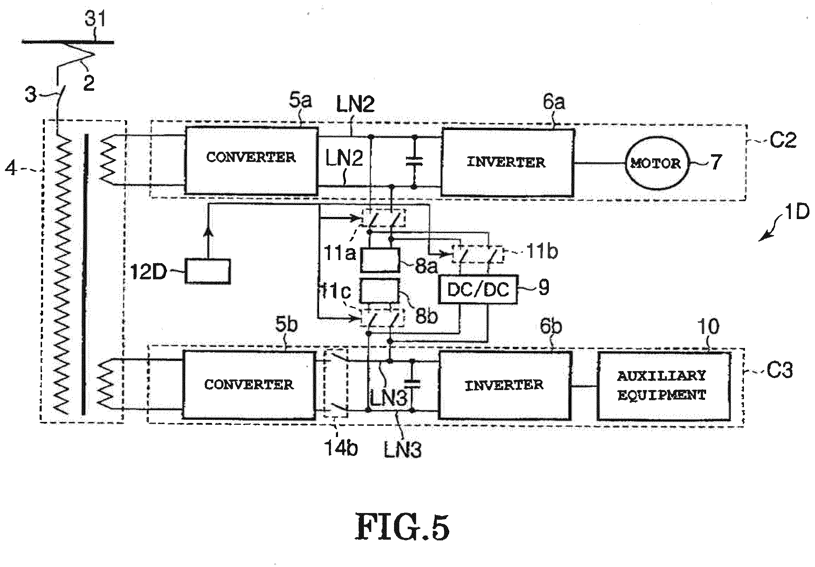

Fig. 5 is an exemplary diagram showing the configuration of an AC electric vehicle 1D according to a fifth embodiment.

The configuration of the AC electric vehicle 1D basically corresponds to the AC electric vehicle 1 according to the first embodiment shown in Fig. 1, is constituted by adding a battery 8b and a contactor 11c, and by providing manual switches 12D instead of the manual switches 12. Otherwise, this embodiment is the same as the first embodiment.

The battery 8b is connected with the output side of the intermediate DC link LN3 of the tertiary circuit C3, and the DC/DC converter 9, through the contactor 11c. In other words, the battery 8b is connected with the battery 8a through the DC/DC converter 9.

When the contactor 11c is closed, the battery 8b and the intermediate DC link LN3 are electrically connected. Also, electrical connection is made between the battery 8b and the output side of the DC/DC converter 9. When the contactor 11c is opened, the battery 8b, the intermediate DC link LN3, and the output side of the DC/DC converter 9 are electrically disconnected.

The manual switches 12D constitute manual operating equipment for use by the operator (driver, motorman or conductor etc) in individually turning ON or OFF the contactors 11a, 11b or 11c, respectively. The manual switches 12D are arranged in the driver's cab or equipment room etc.

When the AC electric vehicle 1C is performing powered operation or regenerative operation, the contactors 11a, 11c are turned ON and the contactor 11b is turned OFF.

Charging/discharging of the battery 8a is performed by the secondary circuit C2. Charging/discharging of the battery 8b is performed by the secondary circuit C3.

When supply of power from the overhead line (train line) 31 is stopped, the operator, in accordance with the circumstances, operates the contactors 11a, 11b, 11c, by using the manual switches 12.

In the case where movement of the AC electric vehicle 1 to a location where supply of power from the overhead line (train line) 31 can be obtained is prioritized, the operator turns the contactor 11a ON and turns the contactor 11b OFF. In this way, the battery 8a supplies power exclusively to the secondary circuit C2.

If it can be expected that the supply of current from the overhead line (train line) 31 will be restored in a short time, the operator turns the contactor 11a OFF and turns the contactor 11b ON. In this way, the battery 8a supplies power exclusively to the tertiary circuit C3, through the DC/DC converter 9.

When the AC electric vehicle 1 is moved while operating the auxiliary equipment 10, the operator turns both the contactors 11a, 11b ON. In this way, the battery 8a supplies power to both the secondary circuit C2 and the tertiary circuit C3.

When the battery 8b is to be discharged, the operator turns the contactor 11c ON. If the battery 8b is not to be discharged, the operator turns the contactor 11c OFF.

When the contactor 11c is turned ON and the contactor 11b is turned ON, the power supplied to the tertiary circuit C3 from the battery 8a is reduced. If the contactor 11c is turned ON and the contactor 11b is turned OFF, power supply to the tertiary circuit C3 can be continued by the battery 8b.

If the contactor 11b is turned ON and the battery 8b is not sufficiently charged, the operator prevents power that is supplied from the battery 8a to the tertiary circuit C3 from being charged onto the battery 8b, by turning the contactor 11c OFF.

With this embodiment, the following beneficial effects can be obtained in addition to the beneficial effects of the first embodiment.

By providing a battery 8b, even when power is not being supplied from the overhead line (train line) 31, power supply to the tertiary circuit C3 can be continued more reliably. Also, the burden of power supply to the tertiary circuit C3 from the battery 8a can be reduced.

### (Sixth embodiment)

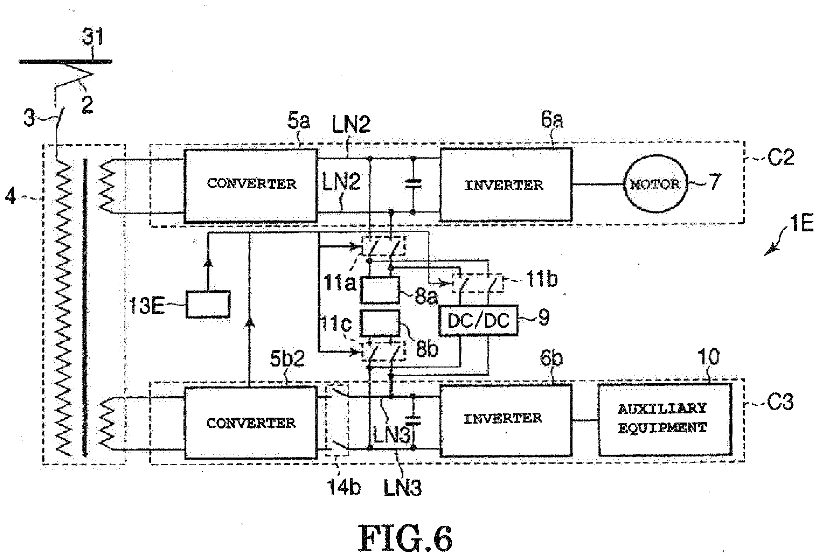

Fig. 6 is an exemplary diagram showing the configuration of an AC electric vehicle 1E according to a sixth embodiment.

The configuration of the AC electric vehicle 1E basically corresponds to the AC electric vehicle 1D according to the fifth embodiment shown in Fig. 5, is constituted by providing a vehicle control device 13E instead of the manual switches 12D and by providing a converter 5b2 instead of the converter 5b. Otherwise, this embodiment is the same as the fifth embodiment.

When the AC electric vehicle 1C performs powered operation or regenerative operation, the contactors 11a, 11c are turned ON, and the contactor 11b is turned OFF.

Charging/discharging of the battery 8a is performed by the secondary circuit C2. Charging/discharging of the battery 8b is performed by the tertiary circuit C3.

When the vehicle control device 13E detects malfunction of the converter 5b2, it turns the contactor 11a OFF and turns the contactor 11b ON. In the same way, even when the converter 5b2 detects malfunction of the converter 5b2 itself, it turns the contactor 11a OFF and turns the contactor 11b ON. In this way, the battery 8a supplies power exclusively to the tertiary circuit C3 through the DC/DC converter 9.

With this embodiment, when the AC electric vehicle 1E detects malfunction of the converter 5b2, it automatically operates the contactors 11a, 11b, so that power supply from the battery 8a is exclusively directed to the tertiary circuit c3.

In this way, unstable operation or cessation of operation of the auxiliary equipment 10 of the tertiary circuit C3 can be avoided. Furthermore, by the addition of power supply by the battery 8b in addition to the battery 8a, power supply to the tertiary circuit C3 can be reinforced.

It should be noted that the above embodiments could be modified in the following ways.

In the second to the sixth embodiments, the condition in which the contactors 11a, in 11b are automatically operated (ON condition or OFF condition) is not restricted to the patterns shown in the respective embodiments. Whether the contactors 11a, 11b are automatically turned ON or OFF can be suitably determined in accordance with for example the environment in which the AC electric vehicle is employed, and/or the situation in which it is operating.

Although, in the second embodiment, the contactors 11a, 11b were constituted so as to be turned ON by a regeneration instruction signal output from the vehicle control device 13, there is no restriction to this. For example, a construction could be adopted in which the inverter 6a outputs a signal that turns the contactors 11a, 11b ON after the inverter 6a has received a regeneration instruction signal output from the vehicle control device 13.

Whereas, in the third embodiment, a construction was adopted in which, when the converter 5b1 detected malfunction of this converter 5b1 itself, it operated the contactors 11a, 11b, there is no restriction to this. For example, a construction could be adopted in which the contactors 11a, 11b are operated on detection of malfunction of the converter 5b1 by the vehicle control device 13. Also, the content that is detected for operating the contactors 11a, 11b need not necessarily be malfunction of the converter 5b1. Indeed any other condition that may be assumed to indicate instability of the power supply to the tertiary circuit C3 may be employed for this purpose.

As the method for detection of malfunction of the converters 5b1 or 5b2 in the third and sixth embodiment, any method may be employed. For example, in the sixth embodiment, self detection of malfunction may be achieved by providing a DC voltage monitoring device 15b, as in the case of the third embodiment.

It should be noted that the present invention is not restricted to the above embodiments without modification and could be realized with these constituent elements modified at the stage of putting the invention into practice, so long as the scope of the invention defined in the claims is not departed from. Also, various inventions could be formed by suitable combination of a plurality of constituent elements. For example, it would also be possible to delete a number of constituent elements from the totality of constituent elements illustrated in the embodiments. Also, constituent elements could be suitably combined across different embodiments.

### [Field of industrial application]

The present invention may be applied to AC electric vehicles that are operated by AC power.

## Claims

1. Method of operating an AC electric vehicle (1) comprising:
a motor (7) configured to generate propulsion power;
a first converter (5a) configured to convert AC power that is supplied from a train line (31) to DC power;
a first inverter (6a) configured to convert DC power converted by the first converter to AC power, and that supplies inverted AC power to the motor;
a first DC link (LN2) for mutual connection of respective DC sides of the first converter and the first inverter;
a first contactor (11a) for electrically connecting and disconnecting the first DC link and a battery (8a);
an auxiliary equipment (10), wherein the auxiliary equipment is illumination or air conditioning devices within a passenger vehicle compartment;
a second converter (5b) configured to convert AC power that is supplied from the train line to DC power;
a second inverter (6b) configured to convert DC power converted by the second converter to AC power and that supplies inverted AC power to the auxiliary equipment;
a second DC link (LN3) for mutual connection of respective DC sides of the second converter and the second inverter;
a second contactor (11b) for electrically connecting and disconnecting the battery and the second DC link through a DC/DC converter (9);
the DC/DC converter (9) configured to convert DC power supplied from the second contactor (11b) to DC voltage suitable for the second DC link and supplies converted DC power to the second DC link;
a first operating means (12) for operating the first contactor manually; and
a second operating means (12) for operating the second contactor manually,
wherein a secondary circuit (C2) includes the first converter (5a), the first inverter (6a), and the motor (7),
wherein a tertiary circuit (C3) includes the second converter (5b), the second inverter (6b), and the auxiliary equipment (10), and
wherein the method comprises:
when current supply from the train line (31) is stopped,
if priority is to move the AC electric vehicle (1) to a location where power supply can be obtained from the train line (31), an operator turns the first contactor (11a) on and turns the second contactor (11b) off, whereby power is supplied by the battery (8a) exclusively to the secondary circuit (C2), and
in case the operator prioritizes continuance of operation of the auxiliary equipment (10), the operator turns the first contactor (11a) off and turns the second contactor (11b) on,
whereby the battery (8a) supplies power exclusively to the tertiary circuit (C3), through the DC/DC converter (9).

2. The method according to claim 1 **characterized in that** the AC electric vehicle comprises:
a third contactor (11c) for electrically connecting or disconnecting the second DC link and a battery (8b).

3. The method according to claim 2 **characterized in that** the AC electric vehicle comprises:
a third operating means (12D) for operating the third contactor manually.

4. The method according to any of claim 1 to claim 3 **characterized in that**:
the first inverter comprises automatic closure means in an event of regenerative operation that automatically closes the first contactor and the second contactor, in the event that the first inverter performs the regenerative action by converting regenerated power generated from the motor to AC power and supplying inverted AC power to the first DC link.

5. The method according to any of claim 1 to claim 4 **characterized in that** the AC electric vehicle comprises:
an abnormality detector (13E) for detecting an abnormality of the second converter; and
means (13E) for closure in an event of abnormality for closing the second contactor in the event that the abnormality detector detects abnormality.

6. The method according to any of claim 1 to claim 5 **characterized in that** the AC electric vehicle comprises:
a section detector (16) for detecting beforehand entry into a no-power zone in which AC power is not supplied from the train line; and
means (13C) for closure in an event of entry into a no-power zone for closing the second contactor in the event that entry into the no-power zone is detected beforehand by the section detector.

## Patentansprüche

1. Verfahren zum Betreiben eines Wechselstrom-Elektrofahrzeugs (1), das umfasst:
einen Motor (7), der ausgestaltet ist, um Antriebsleistung zu erzeugen;
einen ersten Wandler (5a), der ausgestaltet ist, Wechselstromleistung, die von einer Zugleitung (31) geliefert wird, in Gleichstromleistung umzuwandeln;
einen ersten Wechselrichter (6a), der ausgestaltet ist, Gleichstromleistung, die durch den ersten Wandler umgewandelt wird, in Wechselstromleistung umzuwandeln und der den Motor mit wechselgerichteter Wechselstromleistung versorgt;
einen ersten Zwischenkreis (LN2) zur gegenseitigen Verbindung der entsprechenden Gleichstromseiten des ersten Wandlers und des ersten Wechselrichters;
ein erstes Schütz (11a) zum elektrischen Verbinden und Trennen des ersten Zwischenkreises und einer Batterie (8a);
eine Zusatzeinrichtung (10), wobei die Zusatzeinrichtung aus Beleuchtungs- oder Klimatisierungsvorrichtungen innerhalb eines Passagierfahrzeugabteils besteht;
einen zweiten Wandler (5b), der ausgestaltet ist, Wechselstromleistung, die von der Zuglinie geliefert wird, in Gleichstromleistung umzuwandeln;
einen zweiten Wechselrichter (6b), der ausgestaltet ist, Gleichstromleistung, die durch den zweiten Wandler umgewandelt wird, in Wechselstromleistung umzuwandeln, und der die Zusatzeinrichtung mit wechselgerichteter Wechselstromleistung versorgt;
einen zweiten Zwischenkreis (LN3) zur gegenseitigen Verbindung von entsprechenden Gleichstromseiten des zweiten Wandlers und des zweiten Wechselrichters;
ein zweites Schütz (11b) zum elektrischen Verbinden und Trennen der Batterie und des zweiten Zwischenkreises durch einen Gleichstrom/Gleichstrom-Wandler (9);
wobei der Gleichstrom/Gleichstrom-Wandler (9) ausgestaltet ist, Gleichstromleistung, die von dem zweiten Schütz (11b) geliefert wird, in Gleichstromleistung umzuwandeln, die sich für den zweiten Zwischenkreis eignet und den zweiten Zwischenkreis mit umgewandelter Gleichstromleistung versorgt;
ein erstes Betätigungsmittel (12) zum manuellen Betätigen des ersten Schützes; und
ein zweites Betätigungsmittel (12) zum manuellen Betätigen des zweiten Schützes,
wobei ein Sekundärkreis (C2) den ersten Wandler (5a), den ersten Wechselrichter (6a) und den Motor (7) umfasst,
wobei ein Tertiärkreis (C3) den zweiten Wandler (5b), den zweiten Wechselrichter (6b) und die Zusatzeinrichtung (10) umfasst, und
wobei das Verfahren umfasst:
wenn die Stromversorgung von der Zuglinie (31) unterbrochen wird,
wenn die Priorität darin besteht, das Wechselstrom-Elektrofahrzeug (1) zu einem Ort zu bewegen, wo Leistungsversorgung von der Zuglinie (31) erhalten werden kann, ein Bediener das erste Schütz (11a) einschaltet und das zweite Schütz (11b) ausschaltet, wodurch ausschließlich der Sekundärkreis (C2) mit Leistung von der Batterie (8a) versorgt wird, und
in dem Fall, in dem der Bediener die Fortführung des Betriebs der Zusatzeinrichtung (10) priorisiert, der Bediener das erste Schütz (11a) ausschaltet und das zweite Schütz (11b) einschaltet, wodurch die Batterie (8a) ausschließlich den Tertiärkreis (C3) durch den Gleichstrom/Gleichstrom-Wandler (9) mit Leistung versorgt.

2. Verfahren nach Anspruch 1, **dadurch gekennzeichnet, dass** das Wechselstrom-Elektrofahrzeug umfasst: ein drittes Schütz (11c) zum elektrischen Verbinden oder Trennen des zweiten Zwischenkreises und einer Batterie (8b).

3. Verfahren nach Anspruch 2, **dadurch gekennzeichnet, dass** das Wechselstrom-Elektrofahrzeug umfasst: ein drittes Betätigungsmittel (12D) zum manuellen Betätigen des dritten Schützes.

4. Verfahren nach einem von Anspruch 1 bis Anspruch 3, **dadurch gekennzeichnet, dass**:
der erste Wechselrichter automatische Schließmittel in einem Fall eines regenerativen Betriebs umfasst, die in dem Fall, in dem der erste Wechselrichter den regenerativen Vorgang durch Umwandeln von regenerierter Leistung, die von dem Motor erzeugt wird, in Wechselstromleistung durchführt und den ersten Zwischenkreis mit wechselgerichteter Wechselstromleistung versorgt, automatisch das erste Schütz und das zweite Schütz schließen.

5. Verfahren nach einem von Anspruch 1 bis Anspruch 4, **dadurch gekennzeichnet, dass** das Wechselstrom-Elektrofahrzeug umfasst:
einen Anomaliedetektor (13E) zum Feststellen einer Anomalie des zweiten Wandlers; und
Mittel (13E) zum Schließen in einem Fall einer Anomalie zum Schließen des zweiten Schützes in dem Fall, in dem der Anomaliedetektor eine Anomalie feststellt.

6. Verfahren nach einem von Anspruch 1 bis Anspruch 5, **dadurch gekennzeichnet, dass** das Wechselstrom-Elektrofahrzeug umfasst:
einen Abschnittsdetektor (16) zum vorherigen Feststellen des Eintritts in eine Zone ohne Leistung, in der keine Wechselstromleistung von der Zugleitung geliefert wird; und
Mittel (13C) zum Schließen in einem Fall des Eintritts in eine Zone ohne Leistung zum Schließen des zweiten Schützes in dem Fall, in dem der Eintritt in die Zone ohne Leistung im Voraus durch den Abschnittsdetektor festgestellt wird.

## Revendications

1. Procédé de fonctionnement d'un véhicule électrique à courant alternatif, CA, (1) comprenant :
un moteur (7) configuré pour générer une puissance de propulsion ;
un premier convertisseur (5a) configuré pour convertir une puissance CA qui est fournie depuis une chaîne cinématique (31) en une puissance de courant continu, CC ;
un premier inverseur (6a) configuré pour convertir une puissance CC convertie par le premier convertisseur en une puissance CA, et qui fournit une puissance CA inversée au moteur ;
une première liaison CC (LN2) pour une connexion mutuelle de côtés CC respectifs du premier convertisseur et du premier inverseur ;
un premier contacteur (11a) pour connecter et déconnecter électriquement la première liaison CC et une batterie (8a) ;
un équipement auxiliaire (10), dans lequel l'équipement auxiliaire est des dispositifs d'éclairage ou de climatisation à l'intérieur d'un compartiment de passagers de véhicule ;
un deuxième convertisseur (5b) configuré pour convertir une puissance CA qui est fournie depuis la chaîne cinématique en une puissance CC ;
un deuxième inverseur (6b) configuré pour convertir une puissance CC convertie par le deuxième convertisseur en une puissance CA et qui fournit une puissance CA inversée à l'équipement auxiliaire ;
une deuxième liaison CC (LN3) pour une connexion mutuelle de côtés CC respectifs du deuxième convertisseur et du deuxième inverseur ;
un deuxième contacteur (11b) pour connecter et déconnecter électriquement la batterie et la deuxième liaison CC par l'intermédiaire d'un convertisseur CC/CC (9) ;
le convertisseur CC/CC (9) étant configuré pour convertir une puissance CC fournie depuis le deuxième contacteur (11b) en une tension CC appropriée pour la deuxième liaison CC et fournit une puissance CC convertie à la deuxième liaison CC ;
un premier moyen d'actionnement (12) pour actionner le premier contacteur manuellement ; et
un deuxième moyen d'actionnement (12) pour actionner le deuxième contacteur manuellement,
dans lequel un circuit secondaire (C2) inclut le premier convertisseur (5a), le premier inverseur (6a) et le moteur (7),
dans lequel un circuit tertiaire (C3) inclut le deuxième convertisseur (5b), le deuxième inverseur (6b), et l'équipement auxiliaire (10), et
dans lequel le procédé comprend :
lorsque l'alimentation de courant depuis la chaîne cinématique (31) est arrêtée,
si une priorité consiste à déplacer le véhicule électrique CA (1) à un emplacement auquel une alimentation de puissance peut être obtenue depuis la chaîne cinématique (31), un opérateur met le premier contacteur (11a) sous tension et met le deuxième contacteur (11b) hors tension, de telle manière qu'une puissance soit fournie par la batterie (8a) exclusivement au circuit secondaire (C2), et
dans le cas dans lequel l'opérateur priorise la poursuite du fonctionnement de l'équipement auxiliaire (10), l'opérateur met le premier contacteur (11a) hors tension et met le deuxième contacteur (11b) sous tension, de telle manière que la batterie (8a) fournisse une puissance exclusivement au circuit tertiaire (C3), par l'intermédiaire du convertisseur CC/CC (9).

2. Procédé selon la revendication 1, **caractérisé en ce que** le véhicule électrique CA comprend :
un troisième contacteur (11c) pour connecter ou déconnecter électriquement la deuxième liaison CC et une batterie (8b).

3. Procédé selon la revendication 2, **caractérisé en ce que** le véhicule électrique CA comprend :
un troisième moyen d'actionnement (12D) pour actionner le troisième contacteur manuellement.

4. Procédé selon l'une quelconque des revendications 1 à 3, **caractérisé en ce que** :
le premier inverseur comprend des moyens de fermeture automatique dans le cas d'une opération régénérative qui ferment automatiquement le premier contacteur et le deuxième contacteur, si le premier inverseur effectue l'action régénérative par la conversion d'une puissance régénérée générée depuis le moteur en une puissance CA et la fourniture d'une puissance CA inversée à la première liaison CC.

5. Procédé selon l'une quelconque des revendications 1 à 4, **caractérisé en ce que** le véhicule électrique CA comprend :
un détecteur d'anomalie (13E) pour détecter une anomalie du deuxième convertisseur ; et
des moyens (13E) de fermeture en cas d'anomalie pour la fermeture du deuxième contacteur si le détecteur d'anomalie détecte une anomalie.

6. Procédé selon l'une quelconque des revendications 1 à 5, **caractérisé en ce que** le véhicule électrique CA comprend :
un détecteur de section (16) pour détecter une entrée au préalable dans une zone sans puissance dans laquelle une puissance CA n'est pas fournie depuis la chaîne cinématique ; et
des moyens (13C) de fermeture en cas d'entrée dans une zone sans puissance pour la fermeture du deuxième contacteur si une entrée dans la zone sans puissance est détectée au préalable par le détecteur de section.
